(19) Europäisches Patentamt / European Patent Office / Office européen des brevets

(11) **EP 2 776 194 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(21) Anmeldenummer: **13700282.0**

(22) Anmeldetag: **09.01.2013**

(51) Int Cl.:
***B23C 5/10*** *(2006.01)*

(86) Internationale Anmeldenummer:
**PCT/EP2013/050284**

(87) Internationale Veröffentlichungsnummer:
**WO 2014/108180 (17.07.2014 Gazette 2014/29)**

(54) **FRÄSSTIFT**

SHANK MILLING TOOL

FRAISE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.09.2014 Patentblatt 2014/38**

(73) Patentinhaber: **August Rüggeberg GmbH & Co. KG**
**51709 Marienheide (DE)**

(72) Erfinder:
• **HUTH, Nicolas**
**51789 Lindlar (DE)**
• **ZIMMER, Hans-Jürgen**
**51709 Marienheide (DE)**
• **PLÖMACHER, Thomas**
**51709 Marienheide (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**DE-U1- 20 105 015     DE-U1- 29 912 978**
**FR-A1- 2 972 122     US-A1- 2008 206 000**

EP 2 776 194 B1

**Beschreibung**

Die Erfindung betrifft einen Frässtift nach dem Oberbegriff des Anspruches 1.

Im Gegensatz zu Fräswerkzeugen zum Einsatz auf Werkzeugmaschinen werden Frässtifte gemäß der Definition in DIN 8032 (entsprechend ISO 7755/1) in handgeführten Antriebsmaschinen eingesetzt. Beim Einsatz von Fräswerkzeugen in stationären Werkzeugmaschinen sind die Prozessparameter reproduzierbar. Demgegenüber werden beim Einsatz von Frässtiften in handgeführten Antriebsmaschinen die Prozessparameter in weiten Grenzen vom Werker selbst beeinflusst und sind im Einsatz stochastisch verteilt. Darüber hinaus ist der Schutz der Gesundheit des Werkers wesentlich. Das Hand-Arm-System des Werkers soll möglichst keinen schädigenden Schwingungen ausgesetzt werden, und die vom Frässtift gebildeten Späne sollen möglichst keine Schnittverletzungen verursachen. Zur Wirtschaftlichkeit des Frässtiftes gehört auch, dass die gewünschte Zerspanung des Werkstücks möglichst effizient verläuft,

zur Zerpanung von Stahlwerkstoffen sind insbesondere Frässtifte mit der Bezeichnung Walzenrundstift (WRC) und Rundbogen-Frässtift (RBF) gemäß DIN 8032 besonders verbreitet. Diese Formen der Frässtifte bieten die universellsten Einsatzmöglichkeiten für eine handgeführte Bearbeitung von Stahlwerkstoffen.

Aus der EP 1 243 366 A1 ist ein Frässtift nach dem Oberbegriff des Anspruches 1 bekannt, der primär für den Einsatz in der Dentalmedizin geeignet ist.

Es hat sich gezeigt, dass die herkömmliche Ausgestaltung der Frässtifte gemäß der oben angegebenen allgemeinen Gattung verbesserungsbedürftig ist.

Der Erfindung liegt daher die Aufgabe zugrunde, einen Frässtift der allgemeinen Gattung so auszugestalten, dass eine gute manuelle Führbarkeit der Antriebsmaschine mit Frässtift bei hervorragender Zerspanungsleistung an Stahlwerkstoffen, geringer Vibrationsbelastung für den Werker und einer das Verletzungsrisiko des Werkers minimierenden Spanbildung erreicht wird.

Diese Aufgabe wird bei einem Frässtift nach dem Oberbegriff des Anspruches 1 durch die Merkmale des Kennzeichnungsteils des Anspruches 1 gelöst. Überraschenderweise hat sich gezeigt, dass die Kombination von bisher nur bei Frässtiften zur Bearbeitung von Aluminium bekannten Facetten und einer speziellen Wechsel-Anordnung von Schneidzahn-Abschnitten und Zahnteilern zu einer signifikanten Verbesserung im Sinne der vorstehend wiedergegebenen Aufgabe führt. Durch die erfindungsgemäße Ausgestaltung wird erreicht, dass - bezogen auf die Drehrichtung - in jeder Umfangsebene nur jeder zweite Schneidzahn jeweils zum Eingriff am Werkstück kommt, so dass entsprechend kräftige/grobe Späne geschnitten werden, die nicht zu Verletzungen des Werkers führen können, da sie weder an den Händen noch an der Kleidung haften. Andererseits ist eine entsprechend größere, nämlich doppelte Zahl von Schneidzähnen vorhanden, so dass die Schwingungsbelastung des Werkers niedrig ist. Wenn die Überdeckung von Schneidzahn-Abschnitten und Zahnteilern in Drehrichtung mit mindestens 90% angegeben wird, so ist damit gemeint, dass die an sich ideale 100%-ige Überdeckung von Zahnteilern und Schneidzahn-Abschnitten jeweils im Wechsel aus vielerlei Gründen in Grenzbereichen nicht immer exakt erreichbar ist. Dadurch dass in Umfangsrichtung, also in Drehrichtung des Schneidteils, immer abwechselnd ein Schneidzahn-Abschnitt und ein Zahnteiler ausgebildet sind und dass in Längsrichtung des Schneidteils an jedem Schneidzahn Schneidzahn-Abschnitte und Zahnteiler im Wechsel ausgebildet sind, kommt in jeder Umfangsebene jeweils nur jeder zweite Schneidzahn-Abschnitt während einer Umdrehung des Frässtifts zum Eingriff. Demgegenüber kommen aber unmittelbar in Richtung der Rotationsachse benachbart dazu Schneidzahn-Abschnitte zum Einsatz, die um nur einen Schneidezahn in Umfangsrichtung versetzt ausgebildet sind. Dies hat zur Folge, dass - wie bereits erwähnt - bei einer Anzahl von n Schneidzähnen bei einer Umdrehung des Frässtiftes in jeder beliebigen Umfangsebene nur n/2 Schneidzahn-Abschnitte zum spanenden Eingriff kommen, während insgesamt aber sämtliche also n Schneidzähne in Schneideinsatz kommen. Dies hat zur Folge, dass einerseits - wie bereits erwähnt - grobe Späne geschnitten werden, die Frequenz der Schneidzahn-Eingriffe aber doppelt so hoch ist wie die Zahl der Späne pro Umdrehung mit der Konsequenz, dass die Schwingungsbelastung für den Werker gering ist. Dies hat zu einer überraschenden Verbesserung des Frässtiftes im Hinblick auf die gestellte Aufgabe beim Zerspanen von Stahlwerkstoffen geführt.

Die Ansprüche 2 bis 5 geben die optimale Überdeckung der in Umfangsrichtung, das heißt in Drehrichtung hintereinander angeordneten Schneidzahn-Abschnitte und Zahnteiler wieder.

Aus Anspruch 6 ergibt sich, dass eine gerade Anzahl von Schneidzähnen optimal ist. Entsprechendes ergibt sich aus Anspruch 7 für die Zahnteiler.

Die weiteren Unteransprüche geben optimierte Merkmale wieder.

Weitere Merkmale, Einzelheiten und Vorteile der Erfindung ergeben sich aus der nachfolgenden Beschreibung eines Ausführungsbeispiels anhand der Zeichnung. Es zeigt:

Fig. 1    einen Frässtift gemäß der Erfindung in einer Seiten-LängsAnsicht,

Fig. 2    den Schneidteil des Frässtifts nach Fig. 1 in gegenüber Fig. 1 vergrößerter Darstellung,

Fig. 3    eine Schnittdarstellung durch den Schneidteil des Frässtiftes gemäß der Schnittlinie III-III in Fig. 2, wobei nur die Umrandungslinien in der Schnittebene, aber nicht die hinter der Schnittebene liegenden Umrandungslinien dargestellt sind und

Fig. 4    den Einsatz eines Frässtiftes an einem Werkstück.

Der Begriff "Frässtift" wird entsprechend DIN 8032 definiert als ein in handgeführten Maschinen eingesetzter Fräser mit Zylinderschaft. Der nachfolgend beschriebene, zur Erfindung gehörende Frässtift besteht zumindest in seinem Schneidteil aus Hartmetall entsprechend DIN 8032. Der genannten DIN entspricht die internationale Norm ISO 7755/1. Soweit die Einzelbegriffe genormt sind, werden nachfolgend die Normbegriffe verwendet.

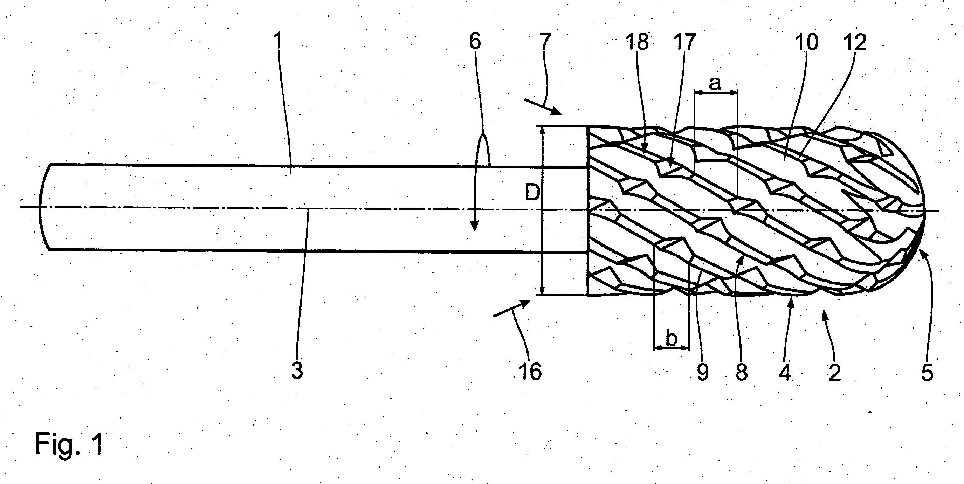

Bei dem in den Fig. 1 bis 3 dargestellten Frässtift handelt es sich um einen Walzenrund-Frässtift, wie er in seiner Grundform in DIN 8032/3 (entsprechend ISO 7755/3) genormt ist. Er weist einen in einer handgeführten Maschine einspannbaren Schaft 1 und einen Schneidteil 2 auf. Schaft 1 und Schneidteil 2 sind drehsymmetrisch zu einer Rotationsachse 3 ausgebildet. Der Schneidteil 2 besteht in jedem Fall aus Hartmetall. Der Schaft 1 kann ebenfalls aus Hartmetall bestehen und ist dann einstückig mit dem Schneidteil 2 ausgebildet. Alternativ und bevorzugt besteht der Schaft 1 aus Stahl und ist mit dem aus Hartmetall bestehenden Schneidteil 2 durch Lötung verbunden. Beim Walzenrund-Frässtift weist der Schneidteil 2 einen in seiner Grundform zylindrischen Grundkörper 4 mit einem dem Schaft 1 abgewandten etwa halbkugelförmigen Kopf 5 auf. Der Grundkörper 4 weist einen Durchmesser D auf.

Die Frässtifte sind so ausgebildet, dass sie bei Antrieb in einer Drehrichtung 6 schneiden, die - vom Schaft 1 zum Schneidteil 2 hin gesehen - der Uhrzeigerdrehrichtung entspricht.

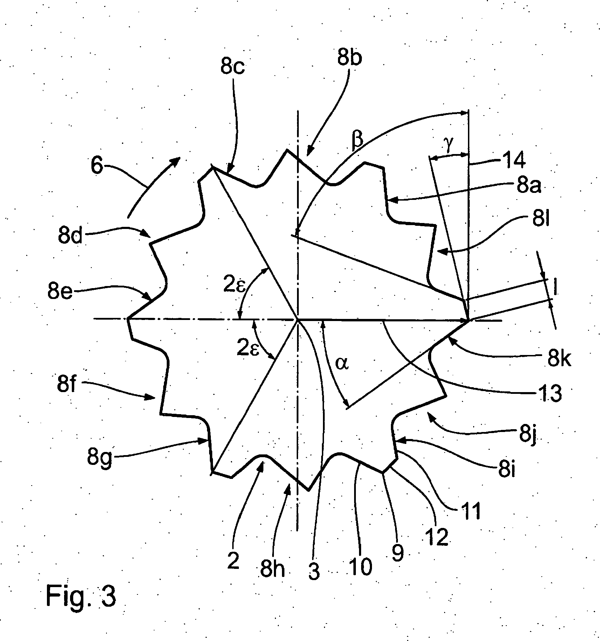

Der zylindrische Grundkörper 4 ist mit in einer ersten Drallrichtung 7 verlaufenden Anzahl n Schneidzähnen 8 versehen, die am Kopf 5 zur Rotationsachse 3 hin auslaufen. Im dargestellten Ausführungsbeispiel sind n = 12 Schneidzähne 8 dargestellt. Von Vorteil ist es, wenn die Anzahl n geradzahlig ist. Die erste Drallrichtung 7 verläuft in Drehrichtung 6. Die Schneidzähne 8 weisen Schneidkanten 9 auf, denen - bezogen auf die Drehrichtung 6 - Spanflächen 10 vorgeordnet sind. Den Schneidkanten 9 in Drehrichtung 6 nachgeordnet sind Freiflächen 11 ausgebildet. Zwischen jeder Schneidkante 9 und der am selben Schneidzahn 8 ausgebildeten Freifläche 11 ist eine so-genannte Facette 12 mit einer Breite 1 in Drehrichtung 6 ausgebildet. Wie sich aus Fig. 3 ergibt, schließt die Spanfläche 10 mit einem Radius 13 durch die Rotationsachse 3 einen Spanwinkel $\alpha$ ein. Die Freifläche 11 schließt mit einer Tangente 14 an die Schneidkante 9 einen Freiwinkel $\beta$ ein. Die Facette 12 schließt mit dieser Tangente 14 einen Facettenwinkel $\gamma$ ein. Die Schneidzähne 8 verlaufen in der ersten Drallrichtung 7 in einem ersten Drallwinkel $\delta 1$, der zwischen der jeweiligen Schneidkante 9 und einer Parallele 15 zur Rotationsachse 3 gebildet wird.

Auf dem Schneidteil 2 sind weiterhin in einer zweiten Drallrichtung 16 verlaufende Reihen von Zahnteilern 17 ausgebildet. Zweckmäßigerweise gilt für die Zahl m der Reihen von Zahnteilern 17 m = n/2, also m = 6. Die zweite Drallrichtung 16 verläuft entgegengesetzt zur ersten Drallrichtung 7, also entgegengesetzt zur Drehrichtung 6, und schließt mit der erwähnten Parallele 15 einen Drallwinkel $\delta 2$ ein. Die Zahnteiler 17 haben einen etwa V-förmigen Querschnitt und unterteilen die Schneidzähne 8 in Schneidezahn-Abschnitte 18. Die Schneidzahn-Abschnitte 18 weisen jeweils zwischen zwei zum selben Schneidezahn 8 gehörenden Zahnteilern 17 - vom Schaft 1 her gesehen - ein voreilendes erstes Ende 19 und ein nacheilendes zweites Ende 20 auf.

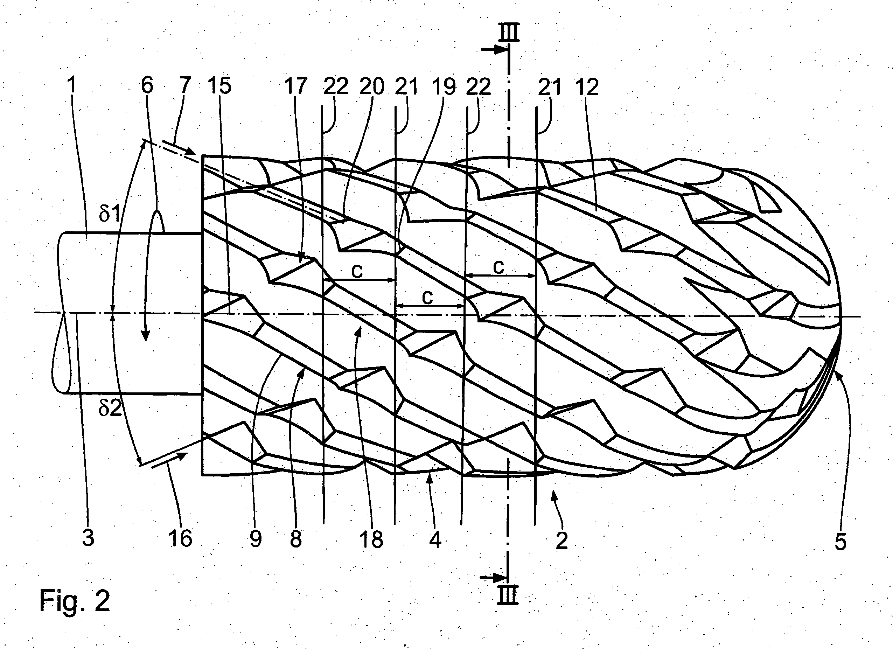

Wie anhand der Fig. 2 und 3 erläutert wird, lassen sich in Richtung der Rotationsachse 3 beabstandete, aber jeweils benachbarte erste und zweite Rotationsebenen 21, 22 durch den zylindrischen Grundkörper 4 des Schneidteils 2 legen. Die Schneidzähne 8 sind in der nachfolgenden Beschreibung entsprechend ihrer Anzahl n = 12 mit 8a, 8b, ... 81 bezeichnet, was nur in Fig. 3 dargestellt ist. Aufgrund der oben angegebenen Art der Darstellung der Fig. 3 sind die Schneidzähne 8b, 8d, 8f, 8h und 8k nicht unmittelbar in Fig. 3 erkennbar, da in der Schnittebene jeweils ein Zahnteiler 17 dargestellt ist. Der Zahnteiler 17 ist aber in dem jeweils vorstehend erwähnten Schneidzahn 8... ausgebildet. Um dies weiter zu verdeutlichen, sind die Bezugslinien nur bis in die Nähe des Zahnteilers 17 geführt.

Die erste Rotationsebene 21 verläuft jeweils durch ein erstes Ende 19 eines Schneidzahn-Abschnitts 18 eines ersten Schneidzahns 8a und des in Drehrichtung 6 nachfolgenden übernächsten, also dritten, fünften, ..., elften Schneidzahns 8c, 8e, ..., 8k. Die zweite Rotationsebene 21 verläuft durch das jeweils zweite Ende 20 eines Schneidzahn-Abschnitts 18 eines zweiten, vierten, ... zwölften Schneidzahns 8b, 8d, ..., 81. Zwischen den beiden Rotationsebenen 21, 22 befindet sich zwischen den Schneidzahn-Abschnitten 18 am ersten, dritten, ..., elften Schneidzahn 8a, 8c, ..., 8k jeweils am zweiten, vierten Schneidzahn 8b, 8d, ..., 81 ein Zahnteiler 17. Wie Fig. 3 entnehmbar ist, ist der zugehörige zweite, vierte, ... zwölfte Schneidzahn 8b, 8d, ..., 81 durch den V-förmig eingeschnittenen Zahnteiler 17 radial nach innen zurückgesetzt. Die Schneidzähne 8 sind in gleichen Winkelabständen von jeweils $\epsilon$ angeordnet. Die Zahnteiler 17 sind ebenfalls in gleichen Winkelabständen von jeweils 2$\epsilon$ angeordnet.

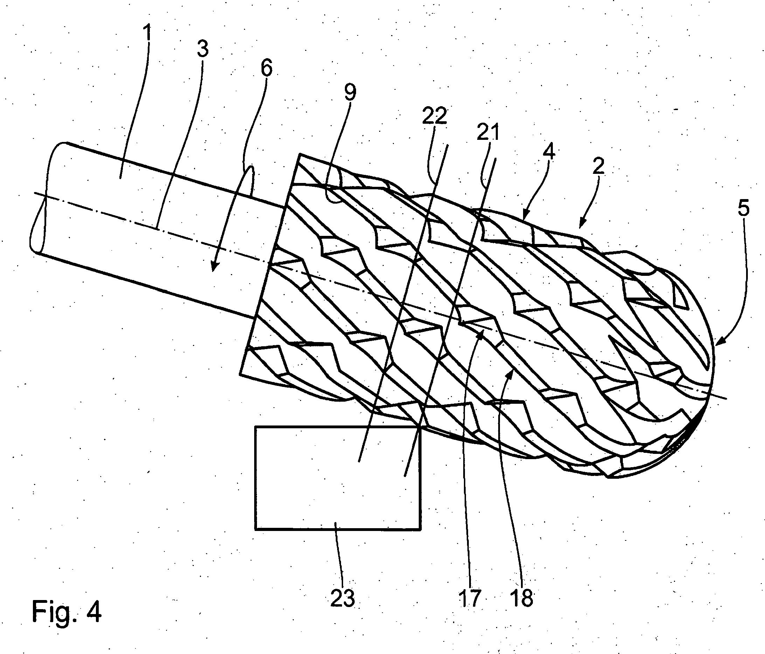

Wie aus Fig. 4 hervorgeht, herrschen immer gleiche Eingriffs- und damit Zerspanungsverhältnisse an einem Werkstück 23, wenn der Frässtift unter sich verändernden Winkeln an einem Werkstück zum Einsatz kommt. Zwischen den beiden Rotationsebenen 21, 22 und den nur in Fig. 2 dargestellten in gleichen Abständen c folgenden Rotationsebenen 21, 22 kommt - in Drehrichtung 6 - immer nur jeder zweite Schneidzahn-Abschnitt 18 zum Eingriff.

Die vorstehende Beschreibung gilt naturgemäß auch für einen Zylinder-Frässtift, der sich von dem zuvor beschriebenen Walzenrund-Frässtift nur dadurch unterscheidet, dass er keinen etwa halbkugelförmigen Kopf 5, sondern eine ebene Stirnfläche aufweist, wie es in der Grundform in DIN 8032/3 (entsprechend ISO 7755/2) genormt ist.

Nachfolgend werden die Daten eines Beispiels für einen Frässtift nach der Erfindung mit einem Durchmesser D = 12 mm wiedergegeben.

| | |
|---|---|
| Anzahl der Schneidzähne 8 | 12 |
| Anzahl m der Reihen von Zahnteilern 17 | 6 |
| Erster Drallwinkel $\delta 1$ | 28° bis 32° |
| Zweiter Drallwinkel $\delta 2$ | 28° bis 32° |
| Spanwinkel $\alpha$ | - 7° bis - 13° |
| Freiwinkel $\beta$ | 35° bis 41° |
| Facettenwinkel $\gamma$ | 12° bis 14° |
| Facettenbreite 1 | 0,7 mm |

**Patentansprüche**

1.  Frässtift zum Einsatz auf handgeführten Maschinen mit einer vorgegebenen Drehrichtung (6) um eine Rotationsachse (3),

    - mit einem Schaft (1),
    - mit einem mit dem Schaft (1) fest verbundenen Schneidteil (2), der

        -- eine Anzahl n von in einer ersten Drallrichtung (7) verlaufenden ersten, zweiten, dritten, ... Schneidzähnen (8a, 8b, 8c, ...) und
        -- in einer entgegengesetzt zur ersten Drallrichtung (7) verlaufenden zweiten Drallrichtung (16) in den ersten, zweiten, dritten, ... Schneidzähnen (8a, 8b, 8c, ...,) ausgebildete erste, zweite, dritte, ... Reihen von Zahnteilern (17) aufweist, die

            --- die ersten, zweiten, dritten, ... Schrieidzähne (8a, 8b, 8c, ...) in Schneidzahn-Abschnitte (18) mit jeweils einem ersten Ende (19) und einem zweiten Ende (20) unterteilen,
            --- wobei die Schneidzähne (8a bis 81) und die Reihen von Zahnteilern (17) jeweils in gleichen Winkelabständen über den Umfang des Schneidteils (2) angeordnet sind,

    - mit an den ersten, zweiten, dritten, ... Schneidzähnen (8a, 8b, 8c, ...) jeweils ausgebildeten Schneidkanten (9), Spanflächen (10) und Freiflächen (11), wobei

        -- die Spanflächen (10) gegenüber den Schneidkanten (9) - bezogen auf die Drehrichtung (6) - voreilend und
        -- die Freiflächen (11) - bezogen auf die Drehrichtung (6) - gegenüber den Schneidkanten (9) nacheilend ausgebildet sind,

    und
    - mit an den Schneidzähnen (8) zwischen den Schneidkanten (9) und den Freiflächen (11) ausgebildeten Facetten,

    **dadurch gekennzeichnet,**

        - **dass** die Zahnteiler (17) gleiche Länge b in Richtung der Rotationsachse (3) haben,
        - **dass** die Schneidzahn-Abschnitte (18) jeweils identische Länge (a) in Richtung der Rotationsachse (3) haben,
        - **dass** der Schneidteil (2) aus Hartmetall gebildet ist,
        - **dass** an den Schneidzähnen (8) zwischen den Schneidkanten (9) und den Freiflächen (11) Facetten (12) ausgebildet sind.
        - **dass** zwei durch das erste Ende (19) bzw. das zweite Ende (20) eines Schneidzahn-Abschnitts (18) eines ersten Schneidzahns (8a) definierte erste und zweite Rotationsebenen (21, 22) jeden in Drehrichtung jeweils übernächsten Schneidzahn-Abschnitt (18) eines dritten, fünften, ... Schneidzahns (8c, 8e, ...) zumindest zu 90 % seiner Länge a zwischen sich aufnehmen und

- **dass** zwischen der ersten und der zweiten Rotationsebene (21, 22) die in dem in Drehrichtung (6) zweiten, vierten .... Schneidezahn (8b, 8d, ...) ausgebildeten Zahnteiler (17) zumindest zu 90% ihrer jeweiligen Länge b aufgenommen sind.

2. Frässtift nach Anspruch 1, **dadurch gekennzeichnet,**
   **dass** in Drehrichtung (6) hintereinander angeordnete Schneidezahn-Abschnitte (18) des dritten, fünften, ... Schneidzahns (8c, 8e, ...) zwischen der ersten und der zweiten Rotationsebene (21, 22) zu 95 % ihrer Länge aufgenommen sind.

3. Frässtift nach Anspruch 1 oder 2, **dadurch gekennzeichnet,**
   **dass** im zweiten, vierten, ... Schneidzahn (8b, 8d, ...) ausgebildete, in Drehrichtung (6) hintereinander angeordnete Zahnteiler (17) zwischen der ersten und zweiten Rotationsebene (21, 22) zu 95 % ihrer Länge aufgenommen sind.

4. Frässtift nach einem der Ansprüche 1 bis 3, **dadurch gekennzeichnet,**
   **dass** in Drehrichtung (6) hintereinander angeordnete Schneidzahn-Abschnitte (18) des dritten, fünften, ... Schneidzahns (8c, 8e, ...) zwischen der ersten und der zweiten Rotationsebene (21, 22) zu 100 % ihrer Länge aufgenommen sind.

5. Frässtift nach einem der Ansprüche 1 bis 4, **dadurch gekennzeichnet,**
   **dass** im zweiten, vierten, ... Schneidzahn (8b, 8d, ...) ausgebildete, in Drehrichtung (6) hintereinander angeordnete Zahnteiler (17) zwischen der ersten und zweiten Rotationsebene (21, 22) zu 100 % ihrer Länge aufgenommen sind.

6. Frässtift nach einem der Ansprüche 1 bis 5, **dadurch gekennzeichnet, dass** eine gerade Anzahl n von Schneidzähnen (8a bis 8f) vorgeselien ist.

7. Frässtift nach einem der Ansprüche 1 bis 6, **dadurch gekennzeichnet,**
   **dass** eine gerade Anzahl m von Reihen von Zahnteilern (17) vorgegehen ist.

8. Frässtift nach einem der Ansprüche 1 bis 7, **dadurch gekennzeichnet,**
   **dass** der Schneidteil (2) einen zylindrischen Grundkörper (4) aufweist.

9. Frässtift nach einem der Ansprüche 1 bis 8, **dadurch gekennzeichnet,**
   **dass** die Schneidzähne (8) und die Reihen von Zahnteilern (17) so angeordnet sind, dass in Richtung der Rotationsachse (3) jeweils auf eine zweite Rotationsebene (22) eine erste Rotationsebene (21) und umgekehrt folgt.

10. Frässtift nach einem der Ansprüche 1 bis 9, **dadurch gekennzeichnet,**
    **dass** für einen Spanwinkel $\alpha$ der Spanflächen (10) gilt: $-7° \geq \alpha \geq -13°$.

11. Frässtift nach einem der Ansprüche 1 bis 10, **dadurch gekennzeichnet,**
    **dass** für einen Freiwinkel $\beta$ der Freifläche (11) gilt: $35° \leq \beta \leq 41°$.

12. Frässtift nach einem der Ansprüche 1 bis 11, **dadurch gekennzeichnet,**
    **dass** für einen Facettenwinkel $\gamma$ der Facette (12) gilt: $12° \leq \gamma \leq 14°$.

13. Frässtift nach einem der Ansprüche 1 bis 12, **dadurch gekennzeichnet,**
    **dass** für die Anzahl n der Schneidzähne (8) gilt: n = 12.

14. Frässtift nach einem der Ansprüche 1 bis 13, **dadurch gekennzeichnet,**
    **dass** für die Anzahl m der Reihen von Zahnteilern (17) gilt: m = n/2 = 6.

15. Frässtifte nach einem der Ansprüche 1 bis 14, **dadurch gekennzeichnet,**
    **dass** für den ersten Drällwinkel $\delta1$ und den zweiten Drallwinkel $\delta2$ gilt: $28° \leq \delta1 = \delta2 \leq 32°$.

**Claims**

1. Milling burr for use in handheld machines at a given direction of rotation (6) about an axis of rotation (3), the milling burr comprising

   - a shank (1);
   - a cutting member (2) which is rigidly connected to the shank (1), the cutting member (2) having

     -- a number n of first, second, third cutting teeth (8a, 8b, 8c, ...) extending in a first direction of twist (7) and
     -- first, second, third, ... rows of tooth dividers (17) extending in a second direction of twist (16) which is opposite to the first direction of twist (7), which tooth dividers (17) are formed in the first, second, third, ... cutting teeth (8a, 8b, 8c, ...), and which tooth dividers (17)

       --- - divide the first, second, third, ... cutting teeth (8a, 8b, 8c, ...) in cutting tooth portions (18) with in each case a first end (19) and a second end (20)
       --- - with the cutting teeth (8a to 81) and the rows of tooth dividers (17) each being arranged at equal angular distances across the periphery of the cutting member (2),

   - cutting edges (9), cutting surfaces (10) and clearance surfaces (11) which are in each case formed on the first, second, third, ... cutting teeth (8a, 8b, 8c, ...), with

     -- the cutting surfaces (10) being arranged upstream of the cutting edges (9) - relative to the direction of rotation (6) -, and
     -- the clearance surfaces (11) being arranged downstream of the cutting edges (9) - relative to the direction of rotation (6) -,

   and

     - facets (12) being formed on the cutting teeth (8) between the cutting edges (9) and the clearance surfaces (11),

   **characterized in**

     - **that** the tooth dividers (17) each have a same length b in the direction of the axis of rotation (3),
     - **that** the cutting tooth portions (18) in each case have an identical length ($\underline{a}$) in the direction of the axis of rotation (3),
     - **that** the cutting member (2) is made of hard metal,
     - **that** two first and second planes of rotation (21, 22) defined by the first end (19) or the second end (20), respectively, of a cutting tooth portion (18) of a first cutting tooth (8a) accommodate at least 90% of the length $\underline{a}$ of each cutting tooth portion (18), which follows the in each case next cutting tooth portion (18) when seen in the direction of rotation, of a third, fifth, ... cutting tooth (8c, 8e, ...), and
     - **that** in each case at least 90% of the length b of the tooth dividers (17) formed in the second, fourth, ... cutting tooth (8b, 8d, ...) when seen in the direction of rotation (6) is accommodated between the first and the second plane of rotation (21, 22).

2. Milling burr according to claim 1, **characterized in**
   **that** 95% of the length of cutting tooth portions (18) of the third, fifth, ... cutting tooth (8c, 8e, ...) arranged one behind the other when seen in the direction of rotation (6) is accommodated between the first and the second plane of rotation (21, 22).

3. Milling burr according to claim 1 or 2, **characterized in**
   **that** 95% of the length of tooth dividers (17) formed in the second, fourth, ... cutting tooth (8b, 8d, ...) and arranged one behind the other when seen in the direction of rotation (6) is accommodated between the first and second plane of rotation (21, 22).

4. Milling burr according to one of claims 1 to 3, **characterized in**
   **that** 100% of the length of cutting tooth portions (18) of the third, fifth, ... cutting tooth (8c, 8e, ...) arranged one behind the other when seen in the direction of rotation (6) is accommodated between the first and the second plane of rotation (21, 22).

5. Milling burr according to one of claims 1 to 4, **characterized in that** 100% of the length of tooth dividers (17) formed in the second, fourth, ... cutting tooth (8b, 8d, ...) and arranged one behind the other when seen in the direction of rotation (6) is accommodated between the first and second plane of rotation (21, 22).

6. Milling burr according to one of claims 1 to 5, **characterized in that** an even number n of cutting teeth (8a to 8f) is provided.

7. Milling burr according to one of claims 1 to 6, **characterized in that** an even number m of rows of tooth dividers (17) is provided.

8. Milling burr according to one of claims 1 to 7, **characterized in that** the cutting member (2) has a cylindrical base body (4).

9. Milling burr according to one of claims 1 to 8, **characterized in that** the cutting teeth (8) and the rows of tooth dividers (17) are arranged in such a way that when seen in the direction of the axis of rotation (3), a second plane of rotation (22) is in each case followed by a first plane of rotation (21) and vice versa.

10. Milling burr according to one of claims 1 to 9, **characterized in that** the following applies to a cutting angle $\alpha$ of the cutting surfaces (10):

$$-7° \geq \alpha \geq -13°.$$

11. Milling burr according to one of claims 1 to 10, **characterized in that** the following applies to a clearance angle $\beta$ of the clearance surface (11): $35° \leq \beta \leq 41°$.

12. Milling burr according to one of claims 1 to 11, **characterized in that** the following applies to a facet angle $\gamma$ of the facet (12): $12° \leq \gamma \leq 14°$.

13. Milling burr according to one of claims 1 to 12, **characterized in that** the following applies to the number n of the cutting teeth (8): n = 12.

14. Milling burr according to one of claims 1 to 13, **characterized in that** the following applies to the number m of the rows of tooth dividers (17): m = n/2 = 6.

15. Milling burr according to one of claims 1 to 14, **characterized in that** the following applies to the first angle of twist $\delta 1$ and the second angle of twist $\delta 2$: $28° \leq \delta 1 = \delta 2 \leq 32°$.

**Revendications**

1. Fraise sur tige destinée à être utilisée sur des machines guidées à la main avec un sens de rotation prescrit (6) autour d'un axe de rotation (3),

    - avec une tige (1),
    - avec une partie de coupe (2) fixement reliée à la tige (1) qui

        -- présente un nombre n de premières, deuxièmes, troisièmes, ... dents de coupe (8a, 8b, 8c, ...) s'étendant dans un premier sens de giration (7) et
        -- dans un second sens de giration (16) s'étendant à l'opposé du premier sens de giration (7) des premières, deuxièmes, troisièmes, ... rangées de diviseurs de dent (17) réalisées dans les premières, deuxièmes, troisièmes, ... dents de coupe (8a, 8b, 8c, ...) qui

            -- divisent les premières, deuxièmes, troisièmes, ... dents de coupe (8a, 8b, 8c, ...) en sections de dent de coupe (18) avec respectivement une première extrémité (19) et une seconde extrémité (20),

--- les dents de coupe (8a à 8l) et les rangées de diviseurs de dent (17) étant agencées respectivement dans des distances angulaires sur la périphérie de la partie de coupe (2),

- avec des arêtes de coupe (9), des faces de coupe (10) et des faces de dépouille (11) réalisées respectivement sur les premières, deuxièmes, troisièmes, ... dents de coupe (8a, 8b, 8c, ...),

-- les faces de coupe (10) étant réalisées en avant par rapport aux arêtes de coupe (9), par rapport au sens de rotation (6), et
-- les faces de dépouille (11) étant réalisées en arrière par rapport au sens de rotation (6), par rapport aux arêtes de coupe (9),

et

- avec des facettes réalisées sur les dents de coupe (8) entre les arêtes de coupe (9) et les faces de dépouille (11),

**caractérisée en ce que**

- les diviseurs de dent (17) ont la même longueur b en direction de l'axe de rotation (3),
- les sections de dent de coupe (18) ont respectivement une longueur identique (a) en direction de l'axe de rotation (3),
- la partie de coupe (2) est formée de métal dur,
- des facettes (12) sont réalisées sur les dents de coupe (8) entre les arêtes de coupe (9) et les faces de dépouille (11),
- deux premiers et seconds plans de rotation (21, 22) définis par la première extrémité (19) ou la seconde extrémité (20) d'une section de dent de coupe (18) d'une première dent de coupe (8a) reçoivent chaque seconde section de dent de coupe (18) respectivement dans le sens de rotation d'une troisième, cinquième, ... dent de coupe (8c, 8e, ...) au moins à 90 % de sa longueur a entre eux et
- les diviseurs de dent (17) réalisés dans la deuxième, quatrième... dent de coupe (8b, 8d, ...) dans le sens de rotation (6) sont reçus au moins à 90 % de leur longueur b entre le premier et le second plan de rotation (21, 22).

2. Fraise sur tige selon la revendication 1, **caractérisée en ce que** des sections de dent de coupe (18) agencées les unes derrière les autres dans le sens de rotation (6) de la troisième, cinquième, ... dent de coupe (8c, 8e, ...) sont reçues entre le premier et le second plan de rotation (21, 22) à 95 % de leur longueur.

3. Fraise sur tige selon la revendication 1 ou 2, **caractérisée en ce que** des diviseurs de dent (17) agencés les uns derrière les autres dans le sens de rotation (6), réalisés dans la deuxième, quatrième, ... dent de coupe (8b, 8d, ...) sont reçus entre le premier et second plan de rotation (21, 22) à 95 % de leur longueur.

4. Fraise sur tige selon l'une quelconque des revendications 1 à 3, **caractérisée en ce que** des sections de dent de coupe (18) agencées les unes derrière les autres dans le sens de rotation (6) de la troisième, cinquième, ... dent de coupe (8c, 8e, ...) sont reçues entre le premier et le second plan de rotation (21, 22) à 100 % de leur longueur.

5. Fraise sur tige selon l'une quelconque des revendications 1 à 4, **caractérisée en ce que** des diviseurs de dent (17) agencés les uns derrière les autres dans le sens de rotation (6), réalisés dans la deuxième, quatrième, ... dent de coupe (8b, 8d, ...) sont reçus entre le premier et le deuxième plan de rotation (21, 22) à 100 % de leur longueur.

6. Fraise sur tige selon l'une quelconque des revendications 1 à 5, **caractérisée en ce qu'**un nombre pair n de dents de coupe (8a à 8f) est prévu.

7. Fraise sur tige selon l'une quelconque des revendications 1 à 6, **caractérisée en ce qu'**un nombre pair m de rangées de diviseurs de dent (17) est prévu.

8. Fraise sur tige selon l'une quelconque des revendications 1 à 7, **caractérisée en ce que** la partie de coupe (2) présente un corps de base (4) cylindrique.

9. Fraise sur tige selon l'une quelconque des revendications 1 à 8, **caractérisée en ce que** les dents de coupe (8) et les rangées de diviseurs de dent (17) sont agencées de sorte qu'un premier plan de rotation (21) suive en direction de l'axe de rotation (3) respectivement un second plan de rotation (22) et inversement.

**10.** Fraise sur tige selon l'une quelconque des revendications 1 à 9, **caractérisée en ce qu'**il s'applique pour un angle de coupe $\alpha$ des faces de coupe (10) : $-7° \geq \alpha \geq -13°$.

**11.** Fraise sur tige selon l'une quelconque des revendications 1 à 10, **caractérisée en ce qu'**il s'applique pour un angle de dépouille $\beta$ de la surface libre (11) : $35° \leq \beta \leq 41°$.

**12.** Fraise sur tige selon l'une quelconque des revendications 1 à 11, **caractérisée en ce qu'**il s'applique pour un angle de facette $\gamma$ de la facette (12) : $12° \leq \gamma \leq 14°$.

**13.** Fraise sur tige selon l'une quelconque des revendications 1 à 12, **caractérisée en ce qu'**il s'applique pour le nombre n des dents de coupe (8) : n = 12.

**14.** Fraise sur tige selon l'une quelconque des revendications 1 à 13, **caractérisée en ce qu'**il s'applique pour le nombre m de rangées de diviseurs de dents (17) : m = n/2 = 6.

**15.** Fraise sur tige selon l'une quelconque des revendications 1 à 14, **caractérisée en ce qu'**il s'applique pour le premier angle de giration $\delta 1$ et le second angle giration $\delta 2$ : $28° \leq \delta 1 = \delta 2 \leq 32°$.

Fig. 1

EP 2 776 194 B1

Fig. 2

EP 2 776 194 B1

EP 2 776 194 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1243366 A1